# EUROPEAN PATENT APPLICATION

(11) **EP 4 682 807 A1**
(43) Date of publication of application: **21.01.2026**
(21) Application number: 25189784.9
(22) Date of filing: 16.07.2025
(51) Int. Cl.: G06Q 30/0241, G06N 20/00

(54) **INTERFACE FOR ONLINE CONTENT GENERATION**

(30) Priority: 18.07.2024 US 202463672933 P; 07.07.2025 US 202519261610
(71) Applicant: Meta Platforms, Inc., Menlo Park, CA 94025 (US)
(72) Inventor: Feld, Erica, Menlo Park (US); Tran, Trang, Menlo Park (US)
(74) Representative: Murgitroyd & Company

(57) **Abstract**

Systems and methods for generating advertisements via an online interface include extracting an attribute from a user profile in accordance with receiving user input at an interactive input form provided at a graphical user interface on a first computing device. The systems and methods also include generating, by a machine learning model, an advertisement that is customized based on the user input and the attribute. The advertisement includes an advertisement content component that includes at least one of a visual component or a text component. The systems and methods also include rendering, on the graphical user interface, an editable version of the advertisement. The advertisement content component is editable on the graphical user interface.

## Description

### TECHNICAL FIELD

The present disclosure relates generally to systems, methods, apparatuses, and computer program products for generating online content, and in particular, online advertisements.

### BACKGROUND

Online advertisements have become an essential marketing tool for companies and businesses operating in the digital space. Designing captivating advertisements is often a daunting task for small businesses, owners, and advertisers who may have limited budget, technical knowledge, advertising, marketing resources, and time. Decisions must be made, for example, with respect to advertisement design, placement, target demographics, design, style, message, graphics, and cost. Even after the online advertisement's creation, further time and effort are often necessary to analyze advertisement effectiveness, Return on Advertisement Spend (ROAS), views, conversion, reach, and metrics.

While some online advertising tools may assist with specific tasks, like posting an advertisement or compiling data metrics after publishing, the initial advertisement itself is left to the individual or business to design and create. For individuals or businesses who may have limited time and resources, it may be particularly challenging and costly to efficiently determine and create an effective advertisement design. Accordingly, improved techniques are needed to address present drawbacks.

### SUMMARY

In meeting the described challenges, examples of the present disclosure provide systems, methods, devices, and computer program products for an interface for online content creation, such as, but not limited to, online advertisement creation.

According to a first aspect, there is provided a method, comprising: extracting an attribute from a user profile in accordance with receiving user input at an interactive input form provided at a graphical user interface on a first computing device; generating, by a machine learning model, an advertisement that is customized based on the user input and the attribute, wherein the advertisement comprises an advertisement content component comprising at least one of a visual component or a text component; and rendering, on the graphical user interface, an editable version of the advertisement, wherein the advertisement content component is editable on the graphical user interface.

Extracting the attribute may comprise analyzing the user profile to compile information indicative of one or more of past advertisements associated with the user profile, text associated with the user profile, a post associated with the user profile, or an image associated with the user profile.

The method may further comprise: determining a tone to be conveyed by the advertisement based on the user input and the attribute; and generating the advertisement content component to convey the tone.

The user input may comprise a feature description indicative of a feature to be included in the advertisement.

The feature may be at least one of: an image, a video, a description, a phrase, or a tone.

The method may further comprise determining the user profile for extracting the attribute based on an account used to access a website providing the interactive input form.

The method may further comprise securely accessing a database to determine the user profile associated with the user input.

The machine learning model may be configured to access a text to image application programming interface (API) to generate the visual component.

The method may further comprise replacing, on the graphical user interface, the user input at the interactive input form with the editable version of the advertisement.

The interactive input form may comprise a text box configured to receive the user input. The interactive input form may comprise a selectable object to initiate a user selection.

The attribute may comprise information indicative of past advertisements associated with the user profile.

Extracting the attribute may occur in response to a user selection at the graphical user interface.

The interactive input form may be accessible on a webpage presented on the graphical user interface.

According to a second aspect, there is provided a system, comprising: at least one processor; and at least one memory communicatively coupled to the at least one processor and comprising computer-readable instructions that upon execution by the at least one processor cause the at least one processor to perform the method of the first aspect.

According to a third aspect, there is provided a computer readable medium comprising computer-executable instructions, which when executed by a computer, cause the computer to carry out the method of the first aspect. The medium may be non-transitory.

According to a fourth aspect, there is provided a computer program product comprising instructions which, when executed by a computer, cause the computer to carry out the method of the first aspect.

Various examples may include systems and methods for extracting one or more attributes from a user profile associated with user input received at an interactive input form provided at a graphical user interface on a first computing device, generating an advertisement based on the user input and the one or more attributes using a machine learning model, and rendering an editable version of the advertisement on the graphical user interface on the first computing device. In various examples, the user input comprises advertising information, and the advertisement may include at least one of a visual component or a text component, and at least one of the text component or the visual component is editable on the graphical user interface.

In an example of the present disclosure, extracting the one or more attributes may include analyzing a user profile to compile information indicative of one or more of past advertisements associated with the user profile, text associated with the user profile, a post associated with a user profile, or an image associated with the user profile.

In another example, a tone to be conveyed by the advertisement may be determined based on the user input and the one or more attributes, and at least one of the visual component or the text component may be generated to convey the tone. The advertising information may also include a description indicative of a feature to be included in the advertisement. The feature may be at least one of: an image, a video, a description, a phrase, or a tone.

In yet another example, the user profile for extracting the one or more attributes may be determined based on an account used to access a website providing the interactive input form. A database may be securely accessed to determine the user profile associated with the user input. In further examples, the machine learning model is configured to access a text to image application programming interface (API) to generate the visual component. Some examples may further include replacing, on the graphical user interface, the user input at the interactive input form with the editable version of the advertisement.

In one example of the present disclosure, a system may be provided. The system may include at least one processor and at least one memory communicatively coupled to the at least one processor and comprising computer-readable instructions that upon execution by the at least one processor cause the at least one processor to perform operations including: extracting one or more attributes from a user profile associated with user input received at an interactive input form provided at a graphical user interface on a first computing device, generating an advertisement based on the user input and the one or more attributes using a machine learning model, wherein the advertisement comprises at least one of a visual component or a text component, and rendering an editable version of the advertisement on the graphical user interface on the first computing device, wherein at least one of the text component or the visual component is editable on the graphical user interface. In examples, the user input may include advertising information,

In examples, the interactive input form may include a text box for receiving the user input, or a selectable object to initiate the user selection. The interactive input form may also be accessible on a webpage presented on the graphical user interface. In another example, the one or more attributes may include information indicative of past advertisements associated with the user profile. The one or more attributes may include information including at least one of: a text, a post, a tone, or an image associated with the user profile. The user profile may be associated with an account used to access a website providing the interactive input form.

The system may perform operations, including extracting the one or more attributes, in response to a user selection at the graphical user interface. The machine learning model may also be configured to access a text to image application programming interface (API) to generate the visual component.

In another example of the present disclosure, a computer program product is provided. The computer program product may include at least one non-transitory computer-readable medium including computer-executable program code instructions stored therein. The computer-executable program code instructions may include program code instructions causing: providing an interactive input form accessible on a graphical user interface on a first computing device, receiving, at the interactive input form, user input, which may include advertising information; and in response to a user selection received at the graphical user interface: extracting one or more attributes from a user profile associated with the user input, generating an advertisement based on the user input and the one or more attributes using a machine learning model, wherein the advertisement comprises at least one of a visual component or a text component, and rendering an editable version of the advertisement on the graphical user interface on the first computing device, wherein at least one of the text component or the visual component is editable on the graphical user interface.

The computer program product may further include program code instructions such that extracting the one or more attributes further includes analyzing a user profile to compile information indicative of one or more of past advertisements associated with the user profile, text associated with the user profile, a post associated with a user profile, or an image associated with the user profile. In another example, the instructions of the computer program product, may further cause determining a tone to be conveyed by the advertisement based on the user input and the one or more attributes; and generating at least one of the visual component or the text component to convey the tone.

Additional advantages will be set forth in part in the description which follows or may be learned by practice. The advantages may be realized and attained by means of the elements and combinations particularly pointed out in the appended claims. It is to be understood that both the foregoing general description and the following detailed description are exemplary and explanatory only and are not restrictive, as claimed.

### BRIEF DESCRIPTION OF THE DRAWINGS

The summary, as well as the following detailed description, is further understood when read in conjunction with the appended drawings. For the purpose of illustrating the disclosed subject matter, there are shown in the drawings examples of the present disclosure; however, the disclosed subject matter is not limited to the specific methods, compositions, and devices disclosed. In addition, the drawings are not necessarily drawn to scale. In the drawings:
FIG. 1 illustrates an example interface, in accordance with various aspects discussed herein.
FIG. 2 illustrates an example networking and communication architecture, in accordance with various aspects discussed herein.
FIG. 3 illustrates a flowchart for producing advertisements via an interface, in accordance with various aspects discussed herein.
FIG. 4 illustrates a block diagram of an example device in accordance with various aspects discussed herein.
FIG. 5 illustrates a block diagram of an example computing system in accordance with various aspects discussed herein.
FIG. 6 illustrates a machine learning and training model in accordance with various aspects discussed herein.
FIG. 7 illustrates a computing system in accordance with various aspects discussed herein.

The figures depict various examples for purposes of illustration only. One skilled in the art will readily recognize from the following discussion that alternative examples of the structures and methods illustrated herein may be employed without departing from the principles described herein.

### DETAILED DESCRIPTION

The present disclosure may be understood more readily by reference to the following detailed description taken in connection with the accompanying figures and examples, which form a part of this disclosure. It is to be understood that this disclosure is not limited to the specific devices, methods, applications, conditions or parameters described and/or shown herein, and that the terminology used herein is for the purpose of describing particular examples only and is not intended to be limiting of the claimed subject matter.

Some examples of the present disclosure will now be described more fully hereinafter with reference to the accompanying drawings, in which some, but not all, examples of the present disclosure are shown. Indeed, various examples of the present disclosure may be embodied in many different forms and should not be construed as limited to the examples set forth herein. Like reference numerals refer to like elements throughout. As used herein, the terms "data," "content," "information" and similar terms may be used interchangeably to refer to data capable of being transmitted, received and/or stored in accordance with examples of the invention. Moreover, the term "exemplary", as used herein, is not provided to convey any qualitative assessment, but instead merely to convey an illustration of an example. Thus, use of any such terms should not be taken to limit the scope of examples of the present disclosure.

As defined herein, a "computer-readable storage medium," which refers to a non-transitory, physical or tangible storage medium (e.g., volatile or non-volatile memory device), may be differentiated from a "computer-readable transmission medium," which refers to an electromagnetic signal.

As referred to herein, a Metaverse may denote an immersive virtual space or world in which devices may be utilized in a network in which there may, but need not, be one or more social connections among users in the network or with an environment in the virtual space or world. A Metaverse or Metaverse network may be associated with three-dimensional virtual worlds, online games (e.g., video games), one or more content items such as, for example, images, videos, non-fungible tokens (NFTs) and in which the content items may, for example, be purchased with digital currencies (e.g., cryptocurrencies) and/or other suitable currencies. In some examples, a Metaverse or Metaverse network may enable the generation and provision of immersive virtual spaces in which remote users may socialize, collaborate, learn, shop, and engage in various other activities within the virtual spaces, including through the use of Augmented/Virtual/Mixed Reality.

References in this description to "an example", "one example", or the like, may mean that the particular feature, function, or characteristic being described is included in at least one example of the present invention. Occurrences of such phrases in this specification do not necessarily all refer to the same example, nor are they necessarily mutually exclusive.

Also, as used in the specification, including the appended claims, the singular forms "a," "an," and "the" include the plural, and reference to a particular numerical value includes at least that particular value, unless the context clearly dictates otherwise. The term "plurality", as used herein, means more than one. When a range of values is expressed, another example includes from the one particular value and/or to the other particular value. Similarly, when values are expressed as approximations, by use of the antecedent "about," it will be understood that the particular value forms another example. All ranges are inclusive and combinable. It is to be understood that the terminology used herein is for the purpose of describing particular aspects only and is not intended to be limiting.

It is to be appreciated that certain features of the disclosed subject matter which are, for clarity, described herein in the context of separate examples, may also be provided in combination in a single example. Conversely, various features of the disclosed subject matter that are, for brevity, described in the context of a single example, may also be provided separately or in any sub-combination. Further, any reference to values stated in ranges includes each and every value within that range. Any documents cited herein are incorporated herein by reference in their entireties for any and all purposes.

In various aspects, systems, methods, devices, or computer program products may provide interfaces to generate advertisements. The techniques and aspects discussed herein differentiate and improve upon conventional systems, at least by generating advertisements and editable media via an online interface based on attributes from at least one of a user profile. In examples, systems and methods may include an interface to enable user input, such as text, to be entered. The interface may then generate an advertisement based on the input.

Various aspects may include an automated interface, such as an interactive form or a bot, and one or more machine learning models to assist with advertisement generation and operation. Such aspects may help eliminate guesswork and save significant time and money for users, such as small business advertisers and individuals, by generating curated ads in real-time. Machine learning models may assist with recommending and generating text, copy, imagery, or videos via user input. Such interfaces and features may be incorporated on and/or accessible via a web page or application, for example. Generated content may be modifiable to enable further customization, and published via an online platform, such as a social media network, or other medium.

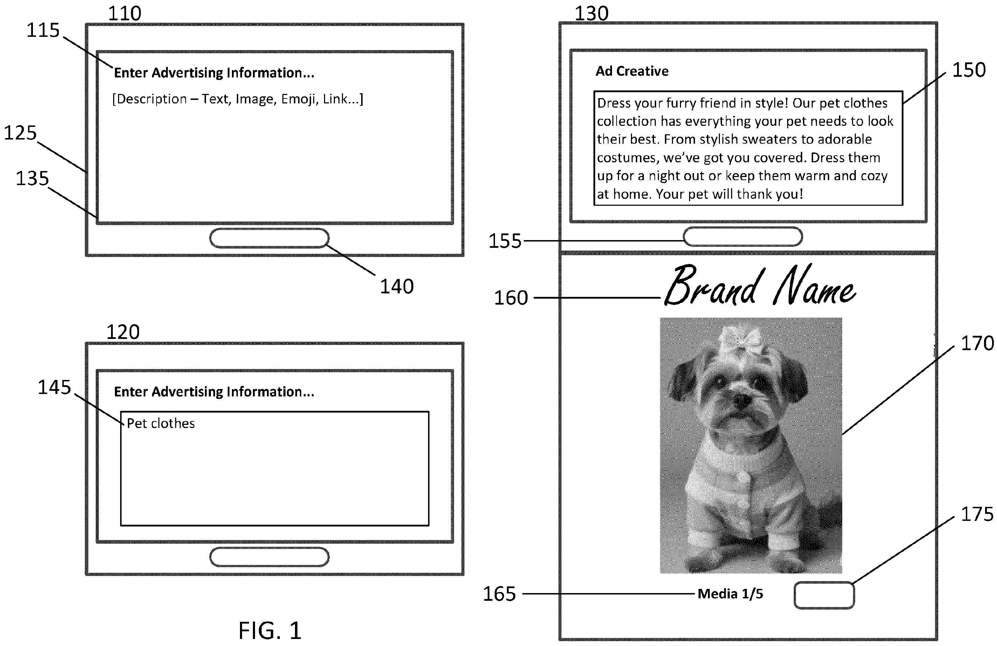

FIG. 1 illustrates example interfaces 110, 120, 130 for generating online media content, such as for example advertisements, in accordance with aspects discussed herein. The interfaces may be provided on a website accessible on a browser via a computing device or mobile device. A first interface 110 may provide a prompt 115 providing instructions to a user. In examples, the first interface 110 may include an outline 125 surrounding an input area 135 which may receive user input. User input may include, for example, text, image(s), emoji(s), link(s), and the like. A selection 140 may provide a button to initiate generation of an advertisement. For ease of explanation, FIG. 1 illustrates an example of generating an advertisement. Still, aspects of the present disclosure are not limited to advertisements, other types of content are contemplated.

In the illustrated example, prompt 115 instructs a user to "Enter Advertising Information." User input, including but not limited to the types of input discussed above, may provide a description relating to the type of advertising content to be created. In examples, this may be a description of the type of content to be included in the advertisement. The user input could also include links, images, or other objects relevant to the desired advertisement. For example, a user may insert an image to be included with the advertisement, a video, a link to a web page relevant to the brand, item, or content to be advertised, or the like. Advertising information may be considered information (e.g., the user input described herein) that is to be used in influencing a generated advertisement.

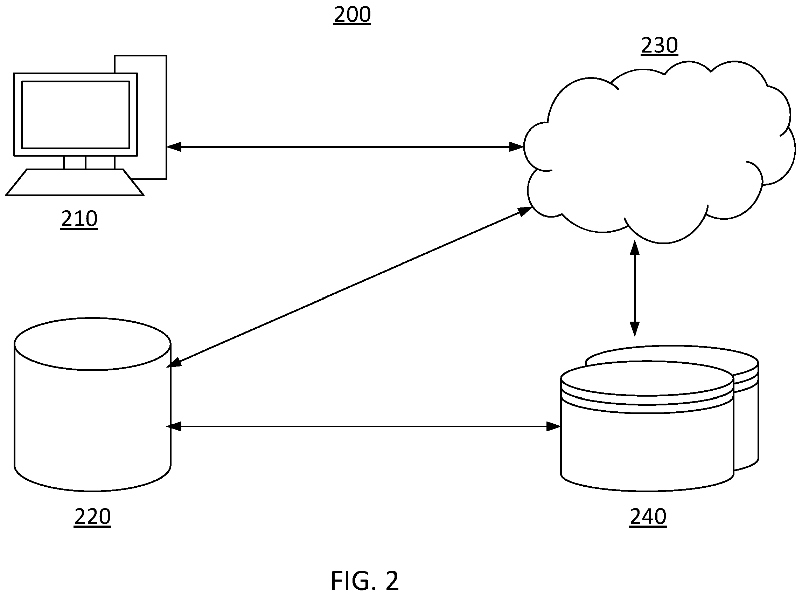

In the example of FIG. 1, the second interface 120 shows user input 145 entered as text input stating "pet clothes." Selection 140 may initiate instructions and communications (further described in FIG. 2) to generate an advertisement. In some examples, as discussed herein, the instructions to generate an advertisement may include extracting one or more attributes from a user profile associated with the user input (e.g., user input 145). Access to the first interface 110 may require logging in to a particular account (e.g., an advertising account, a social media account, a business profile, etc.). As such, advertisements may be further tailored to the particular account, business, individual, or other entity entering the advertising information. For example, the associated user profile may provide information relating to one or more of past advertisements, texts, posts, images, or videos, which may be helpful to provide context, for example, relating to the brand, product, style, vibe, tone, color scheme, or other aspects of the advertisement. Such information may be utilized via one or more machine learning models, along with the user input (e.g., description) entered at input area 135.

After selection 140 initiates the advertisement generation, a third interface 130 may then appear. The third interface 130 may include an editable advertisement according to the user input 145. The advertisement may include an editable text box 150 including an advertisement content component that includes at least one of a visual component or a textual component. In examples, the visual component may be an image, such as generated image 170. In additional examples, the visual component may include one or more images, one or more videos, or other graphical features. The textual component may be copy text, such as the text provided in editable text box 150. The textual component may also include, for example, a description of the advertised item or service, stylized text, or other textual feature to draw attention to the advertisement.

The third interface 130 may generally display a preview of how that advertisement would appear online, e.g., on a web page or social media post. The generated copy text may be typed and edited inside the editable text box 150 based on user preference. Selection 155 may provide one or more options to copy the text, generate new text, or enable editing, for example.

The third interface 130 may further provide a title 160, such as a Brand Name, item name, or other identifier relating to the advertisement. A selection 165 may be provided to generate different options, such as different images that may be selected for the advertisement. Selection 165, for example, indicates that there are five media options (e.g., images, videos, GIFs, etc.) for the generated advertisement, and that the currently displayed, generated image 170 is the first of the available five options. Selection 175 may initiate publication of the proposed advertisement.

It should be appreciated that the layout of interfaces 110, 120, 130, including but not limited to its shape, color, design, and placement of various aspects, such as selections 140, 155, 165, 175, may be changed based on specific design considerations, web page layout, available space, desired editing options, and the like.

FIG. 2 illustrates an example networking and communication architecture in accordance with aspects discussed herein. In network 200, a user device 210 may be a computing device providing a graphical user interface including. In some examples, the user device 210 may include a display through which a user may interact with online content, such as a webpage or social media application. The user device 210 may also provide access to one or more online platforms, such as a social media site, advertising interface, application, and the like.

A network 230 may communicate with the user device, for example, via a secure communication. In examples, the network is a cloud network. The network 230 may also be in communication with at least one machine learning model 220 and one or more databases 240. The network 230 may serve as a communication node to transmit information between the user device 210 and other components of network 200.

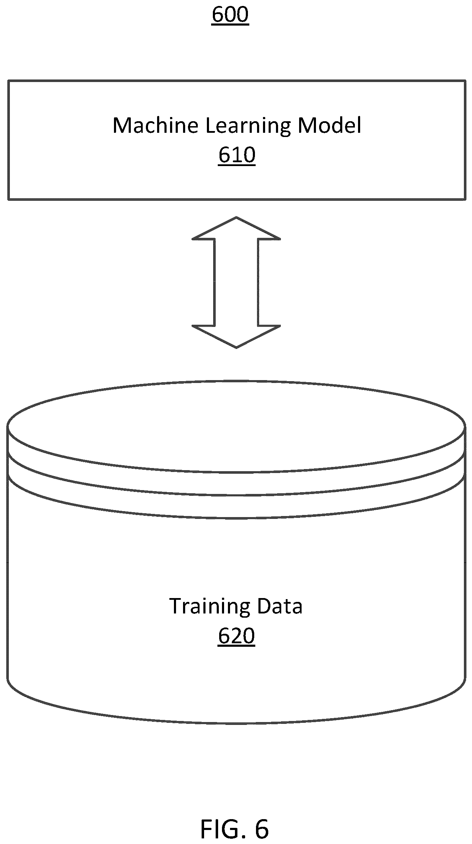

The machine learning model 220 (see also, FIG. 6) may communicate with one or more databases 240 and process operations relating to user profiles, user input, online content, advertisements, images, videos, and other media content to generate online media content in accordance with aspects discussed herein. For example, the machine learning model 220 may receive user profile information stored in database(s) 240. The user profile information may include one or more attributes associated with the user profile, such as posts, likes, interactions, advertisements, interests, followers, industry information, and the like. Such attributes may also provide quantitative and qualitative data about the user. For example, attributes may provide information relating to at least one of: a number of posts, a timing of posts, content, style, or tone of past posts or advertisements, content interacted with or re-posted by the user profile, a good or service associated with the user profile, or language, names, and terms associated with the user profile. The machine learning model 220 may then be able to assess such data to determine attributes relating to one or more texts, posts, tones, associated with the user or inferable information relative to the user, business, or industry.

In additional examples, the machine learning model may receive information from database(s) 240 relevant to generating online media content, such as other advertisements, photos, videos, and similar content to the user's profile, posts, and audience. Audience information may provide attributes applicable to online media content and advertisements that would be targeted by and/or associated with the user. In an example, a user profile may be a business profile related to pet services. Machine learning model 220 may receive, e.g., from database(s) 240, information and attributes related to the user's services, based on the business profile, as well as similar pet services, audience(s) associated with the services, content relevant to such service, and content that may be of interest to the business and its target audience. It should be appreciated that one or more machine learning models 220 and databases 240 may be utilized, in accordance with aspects discussed herein.

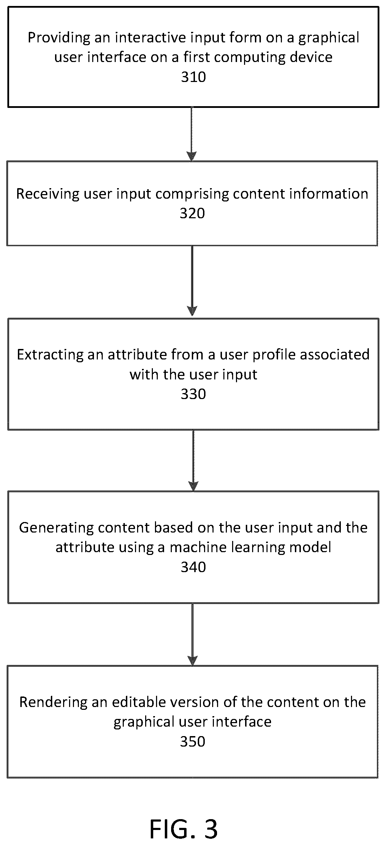

FIG. 3 illustrates a flow chart for providing observable virtual images. At block 310, aspects may provide an interactive input form (e.g., interfaces 110, 120, 130) on a graphical user interface on a first computing device (e.g., user device 210). In examples, the interactive input (e.g., interfaces 110, 120, 130) may enable a user to enter one or more of text, audio, images, links, or the like. The interactive input may be provided, for example, on a webpage displayed on a computing device (e.g., user device 210). In other examples, the interactive input form may include an input area 135 (e.g., a text box) for receiving the user input, and a selectable object (e.g., selections 140, 155, 165, 175) to initiate the user selection.

At block 320, aspects may receive user input (e.g., user input 145) comprising content information. The content information may be an example of advertising information that may include a description indicative of a feature to be included in the advertisement. The feature may be at least one of an image, a video, a description, a phrase, or a tone.

At block 330, aspects may extract an attribute from a user profile associated with the user input. In some examples, one or more attributes may be extracted. The attribute(s) may be obtained from one or more databases (e.g., database(s) 240). In examples, extracting the one or more attributes may include analyzing a user profile to compile information indicative of one or more of past advertisements associated with the user profile, text associated with the user profile, a post associated with the user profile, a style, a tone, or an image associated with the user profile.

Some aspects may determine the user profile for extracting the one or more attributes based on an account used to access a website providing the interactive input form. Extracting the set of attributes may occur in response to a user selection at the graphical user interface. The user profile may also be determined by securely accessing a database (e.g., database(s) 240). The one or more attributes comprise information indicative of past advertisements associated with the user profile.

At block 340, aspects may generate content, such as an advertisement, (see, e.g., editable text box 150, title 160, and generated image 170), based on the user input and the attribute using a machine learning model. The machine learning model may be hosted at a remote server. The machine learning model (e.g., machine learning models 220, 610) may be configured to access a text to image application programming interface (API) to generate the visual component.

In some examples, aspects may further determine a tone to be conveyed by the advertisement based on the user input and the attribute, and generate an advertisement content component that includes at least one of the visual component or the text component to convey the tone. In an example, the user input received at the interactive input form may describe a tone (e.g., "upbeat," "positive," "formal," "humorous," etc.) to be conveyed. For an "upbeat" tone, for example, the visual component may generate an image that is brightly colored and conveys cheer and excitement. The text component may contain phrasing that conveys positive enthusiasm for the product. In another example, aspects may determine a tone based on the attribute and information from the user profile. The tone of past posts and past advertisements associated with the user profile may be determined, and at least one of the text component or the visual component may incorporate the tone, e.g., to provide consistency in the type of advertisements associated with the user profile.

At block 350, aspects may render an editable version of the content (e.g., editable text box 150) on the graphical user interface. In some examples, this may include replacing, on the graphical user interface, the user input at the interactive input form with the editable version of the advertisement (see, e.g., interfaces 130).

Operations of blocks 310-350 may occur separately, independently, and/or concurrently with the operations at blocks 310-350.

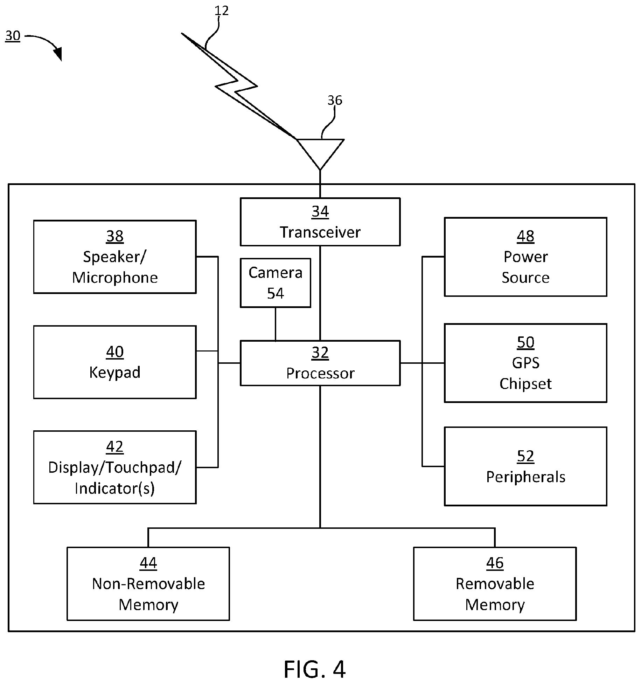

FIG. 4 illustrates a block diagram of an example hardware/software architecture of a user equipment (UE) 30. As shown in FIG. **4****,** the UE 30 (also referred to herein as node 30) may include a processor 32, non-removable memory **44,** removable memory 46, a speaker/microphone 38, a keypad 40, a display, touchpad, and/or indicators 42, a power source 48, a global positioning system (GPS) chipset 50, and other peripherals 52. The UE 30 may also include a camera 54. In an example, the camera 54 may be a smart camera configured to sense images appearing within one or more bounding boxes. The UE 30 may also include communication circuitry, such as a transceiver 34 and a transmit/receive element 36. It should be appreciated that the UE 30 may include any sub-combination of the foregoing elements while remaining consistent with an example.

The processor 32 may be a special purpose processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. In general, the processor 32 may execute computer-executable instructions stored in the memory (e.g., non-removable memory 44 and/or memory 46) of the node 30 in order to perform the various required functions of the node. For example, the processor 32 may perform signal coding, data processing, power control, input/output processing, and/or any other functionality that enables the node 30 to operate in a wireless or wired environment. The processor 32 may run application-layer programs (e.g., browsers) and/or radio access-layer (RAN) programs and/or other communications programs. The processor 32 may also perform security operations such as authentication, security key agreement, and/or cryptographic operations, such as at the access-layer and/or application layer, for example.

The processor 32 is coupled to its communication circuitry (e.g., transceiver 34 and transmit/receive element 36). The processor 32, through the execution of computer executable instructions, may control the communication circuitry in order to cause the node 30 to communicate with other nodes via the network to which it is connected.

The transmit/receive element 36 may be configured to transmit signals to, or receive signals from, other nodes or networking equipment. For example, the transmit/receive element 36 may be an antenna configured to transmit and/or receive radio frequency (RF) signals. The transmit/receive element 36 may support various networks and air interfaces, such as wireless local area network (WLAN), wireless personal area network (WPAN), cellular, and the like. In yet another example, the transmit/receive element 36 may be configured to transmit and receive both RF and light signals. It should be appreciated that the transmit/receive element 36 may be configured to transmit and/or receive any combination of wireless or wired signals.

The transceiver 34 may be configured to modulate the signals that are to be transmitted by the transmit/receive element 36 and to demodulate the signals that are received by the transmit/receive element 36. As noted above, the node 30 may have multi-mode capabilities. Thus, the transceiver 34 may include multiple transceivers for enabling the node 30 to communicate via multiple radio access technologies (RATs), such as universal terrestrial radio access (UTRA) and Institute of Electrical and Electronics Engineers (IEEE 802.11), for example.

The processor 32 may access information from, and store data in, any type of suitable memory, such as the non-removable memory 44 and/or the removable memory 46. For example, the processor 32 may store session context in its memory, as described above. The non-removable memory 44 may include RAM, ROM, a hard disk, or any other type of memory storage device. The removable memory 46 may include a subscriber identity module (SIM) card, a memory stick, a secure digital (SD) memory card, and the like. In other examples, the processor 32 May access information from, and store data in, memory that is not physically located on the node 30, such as on a server or a home computer.

The processor 32 may receive power from the power source 48 and may be configured to distribute and/or control the power to the other components in the node 30. The power source 48 may be any suitable device for powering the node 30. For example, the power source 48 may include one or more dry cell batteries (e.g., nickel-cadmium (NiCad), nickel-zinc (NiZn), nickel metal hydride (NiMH), lithium-ion (Li-ion), etc.), solar cells, fuel cells, and the like.

The processor 32 may also be coupled to the GPS chipset 50, which may be configured to provide location information (e.g., longitude and latitude) regarding the current location of the node 30. It should be appreciated that the node 30 may acquire location information by way of any suitable location-determination method while remaining consistent with an example.

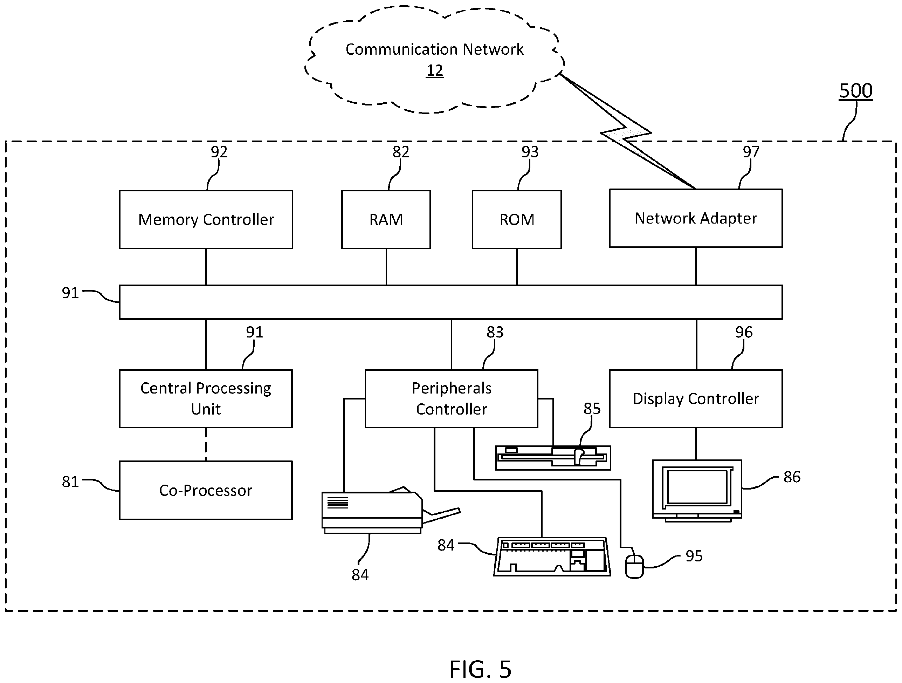

FIG. 5 is a block diagram of a computing system 500 which may also be used to implement components of the system or be part of the UE 30. The computing system 500 may comprise a computer or server and may be controlled primarily by computer readable instructions, which may be in the form of software, wherever, or by whatever means such software is stored or accessed. Such computer readable instructions may be executed within a processor, such as central processing unit (CPU) 91, to cause computing system 500 to operate. In many workstations, servers, and personal computers, central processing unit 91 may be implemented by a single-chip CPU called a microprocessor. In other machines, the central processing unit 91 may comprise multiple processors. Coprocessor 81 may be an optional processor, distinct from main CPU 91, that performs additional functions or assists CPU 91.

In operation, CPU 91 fetches, decodes, and executes instructions, and transfers information to and from other resources via the computer's main data-transfer path, system bus 80. Such a system bus connects the components in computing system 500 and defines the medium for data exchange. System bus 80 typically includes data lines for sending data, address lines for sending addresses, and control lines for sending interrupts and for operating the system bus. An example of such a system bus 80 is the Peripheral Component Interconnect (PCI) bus.

Memories coupled to system bus 80 include RAM 82 and ROM 93. Such memories may include circuitry that allows information to be stored and retrieved. ROMs 93 generally contain stored data that may not easily be modified. Data stored in RAM 82 may be read or changed by CPU 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode may access only memory mapped by its own process virtual address space; it may not access memory within another process's virtual address space unless memory sharing between the processes has been set up.

In addition, computing system 500 may contain peripherals controller 83 responsible for communicating instructions from CPU 91 to peripherals, such as printer 94, keyboard 84, mouse 95, and disk drive 85.

Display 86, which is controlled by display controller 96, is used to display visual output generated by computing system 500. Such visual output may include text, graphics, animated graphics, and video. Display 86 may be implemented with a cathode-ray tube (CRT)-based video display, a liquid-crystal display (LCD)-based flat-panel display, gas plasma-based flat-panel display, or a touch-panel. Display controller 96 includes electronic components required to generate a video signal that is sent to display 86.

Further, computing system 500 may contain communication circuitry, such as for example a network adaptor 97, that may be used to connect computing system 500 to an external communications network, such as network 12 of FIG. 4, to enable the computing system 500 to communicate with other nodes (e.g., UE 30) of the network.

FIG. 6 illustrates a framework 600 employed by a software application (e.g., computer code, a computer program) for generating advertisements, in accordance with aspects discussed herein. The framework 600 may be hosted remotely. Alternatively, the framework 600 may reside within the UE 30 shown in FIG. 4 and/or may be processed by the computing system 500 shown in FIG. 5. The machine learning model 610 may be operably coupled to the stored training data 620 in a database (e.g., database(s) 240).

In an example, the training data 620 may include attributes of thousands of objects. For example, the object(s) may be identified and/or associated with user profiles, posts, photographs/images, videos, web pages, other advertisements, Graphics Interchange Formats (GIFs), and/or the like. Attributes may include but are not limited to the size, shape, orientation, position of an object, i.e., within an image, photograph, video, scene, advertisement, etc. The training data 620 employed by the machine learning model 610 may be fixed or updated periodically. Alternatively, the training data 620 may be updated in real-time based upon the evaluations performed by the machine learning model 610 in a non-training mode. This is illustrated by the double-sided arrow connecting the machine learning model 610 and stored training data 620.

In operation, the machine learning model 610 may evaluate attributes of advertisements, images, videos, and other media obtained by hardware (e.g., UE 30, etc.). For example, aspects of a user profile, posts, advertisements, pictures, images, web pages and the like may be ingested and analyzed. The attributes of any of the above (e.g., captured image of an object, post, text, advertisement, profile attribute, characteristic, etc.) may then be compared with respective attributes of stored training data 620 (e.g., prestored objects). The likelihood of similarity between each of the obtained attributes (e.g., of a captured image or text) and the stored training data 620 (e.g., prestored objects) is given a determined confidence score. In one example, if the confidence score exceeds a predetermined threshold, the attribute is included in an image description that is ultimately communicated to the user via a user interface of a computing device (e.g., UE 30, computing system 500). In another example, the description may include a certain number of attributes which exceed a predetermined threshold to share with the user. The sensitivity of sharing more or less attributes may be customized based upon the needs of the particular user.

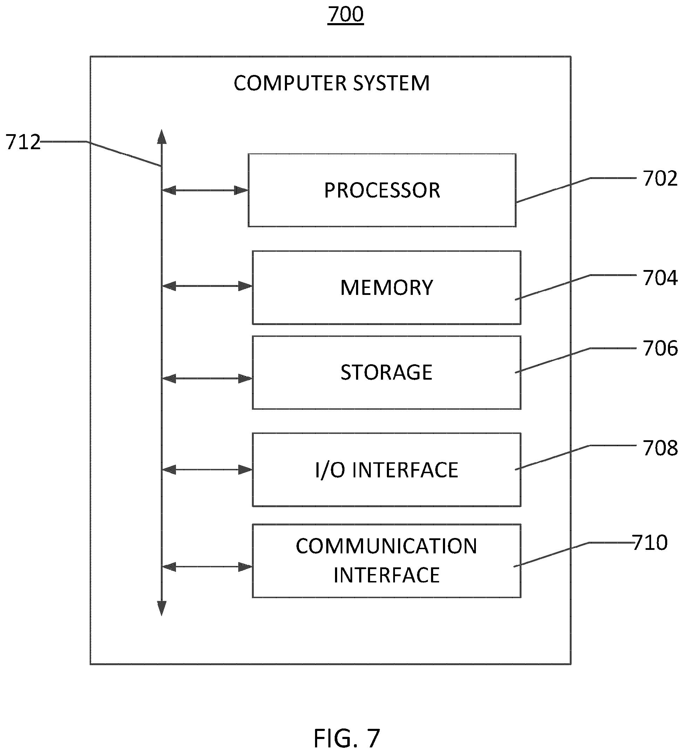

FIG. 7 illustrates an example computer system 700. In examples, one or more computer systems 700 perform one or more steps of one or more methods described or illustrated herein. In particular examples, one or more computer systems 700 provide functionality described or illustrated herein. In examples, software running on one or more computer systems 700 performs one or more steps of one or more methods described or illustrated herein or provides functionality described or illustrated herein. Examples include one or more portions of one or more computer systems 700. Herein, reference to a computer system may encompass a computing device, and vice versa, where appropriate. Moreover, reference to a computer system may encompass one or more computer systems, where appropriate.

This disclosure contemplates any suitable number of computer systems 700. This disclosure contemplates computer system 700 taking any suitable physical form. As example and not by way of limitation, computer system 700 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 700 may include one or more computer systems 700; be unitary or distributed; span multiple locations; span multiple machines; span multiple data centers; or reside in a cloud, which may include one or more cloud components in one or more networks. Where appropriate, one or more computer systems 700 may perform without substantial spatial or temporal limitation one or more steps of one or more methods described or illustrated herein. As an example, and not by way of limitation, one or more computer systems 700 may perform in real time or in batch mode one or more steps of one or more methods described or illustrated herein. One or more computer systems 700 may perform at different times or at different locations one or more steps of one or more methods described or illustrated herein, where appropriate.

In examples, computer system 700 includes a processor 702, memory 704, storage 706, an input/output (I/O) interface 708, a communication interface 710, and a bus 712. Although this disclosure describes and illustrates a particular computer system having a particular number of particular components in a particular arrangement, this disclosure contemplates any suitable computer system having any suitable number of any suitable components in any suitable arrangement.

In examples, processor 702 includes hardware for executing instructions, such as those making up a computer program. As an example and not by way of limitation, to execute instructions, processor 702 may retrieve (or fetch) the instructions from an internal register, an internal cache, memory 704, or storage 706; decode and execute them; and then write one or more results to an internal register, an internal cache, memory 704, or storage 706. In particular examples, processor 702 may include one or more internal caches for data, instructions, or addresses. This disclosure contemplates processor 702 including any suitable number of any suitable internal caches, where appropriate. As an example, and not by way of limitation, processor 702 may include one or more instruction caches, one or more data caches, and one or more translation lookaside buffers (TLBs). Instructions in the instruction caches may be copies of instructions in memory 704 or storage 706, and the instruction caches may speed up retrieval of those instructions by processor 702. Data in the data caches may be copies of data in memory 704 or storage 706 for instructions executing at processor 702 to operate on; the results of previous instructions executed at processor 702 for access by subsequent instructions executing at processor 702 or for writing to memory 704 or storage 706; or other suitable data. The data caches may speed up read or write operations by processor 702. The TLBs may speed up virtual-address translation for processor 702. In particular examples, processor 702 may include one or more internal registers for data, instructions, or addresses. This disclosure contemplates processor 702 including any suitable number of any suitable internal registers, where appropriate. Where appropriate, processor 702 may include one or more arithmetic logic units (ALUs); be a multi-core processor; or include one or more processors 702. Although this disclosure describes and illustrates a particular processor, this disclosure contemplates any suitable processor.

In examples, memory 704 includes main memory for storing instructions for processor 702 to execute or data for processor 702 to operate on. As an example, and not by way of limitation, computer system 700 may load instructions from storage 706 or another source (such as, for example, another computer system 700) to memory 704. Processor 702 may then load the instructions from memory 704 to an internal register or internal cache. To execute the instructions, processor 702 may retrieve the instructions from the internal register or internal cache and decode them. During or after execution of the instructions, processor 702 may write one or more results (which may be intermediate or final results) to the internal register or internal cache. Processor 702 may then write one or more of those results to memory 704. In particular examples, processor 702 executes only instructions in one or more internal registers or internal caches or in memory 704 (as opposed to storage 706 or elsewhere) and operates only on data in one or more internal registers or internal caches or in memory 704 (as opposed to storage 706 or elsewhere). One or more memory buses (which may each include an address bus and a data bus) may couple processor 702 to memory 704. Bus 712 may include one or more memory buses, as described below. In examples, one or more memory management units (MMUs) reside between processor 702 and memory 704 and facilitate accesses to memory 704 requested by processor 702. In particular examples, memory 704 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 704 may include one or more memories 704, where appropriate. Although this disclosure describes and illustrates particular memory, this disclosure contemplates any suitable memory.

In examples, storage 706 includes mass storage for data or instructions. As an example, and not by way of limitation, storage 706 may include a hard disk drive (HDD), a floppy disk drive, flash memory, an optical disc, a magneto-optical disc, magnetic tape, or a Universal Serial Bus (USB) drive or a combination of two or more of these. Storage 706 may include removable or non-removable (or fixed) media, where appropriate. Storage 706 may be internal or external to computer system 700, where appropriate. In examples, storage 706 is non-volatile, solid-state memory. In particular examples, storage 706 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 706 taking any suitable physical form. Storage 706 may include one or more storage control units facilitating communication between processor 702 and storage 706, where appropriate. Where appropriate, storage 706 may include one or more storages 706. Although this disclosure describes and illustrates particular storage, this disclosure contemplates any suitable storage.

In examples, I/O interface 708 includes hardware, software, or both, providing one or more interfaces for communication between computer system 700 and one or more I/O devices. Computer system 700 may include one or more of these I/O devices, where appropriate. One or more of these I/O devices may enable communication between a person and computer system 700. As an example, and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 708 for them. Where appropriate, I/O interface 708 may include one or more device or software drivers enabling processor 702 to drive one or more of these I/O devices. I/O interface 708 may include one or more I/O interfaces 708, where appropriate. Although this disclosure describes and illustrates a particular I/O interface, this disclosure contemplates any suitable I/O interface.

In examples, communication interface 710 includes hardware, software, or both providing one or more interfaces for communication (such as, for example, packet-based communication) between computer system 700 and one or more other computer systems 700 or one or more networks. As an example, and not by way of limitation, communication interface 710 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 710 for it. As an example, and not by way of limitation, computer system 700 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 700 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 700 may include any suitable communication interface 710 for any of these networks, where appropriate. Communication interface 710 may include one or more communication interfaces 710, where appropriate. Although this disclosure describes and illustrates a particular communication interface, this disclosure contemplates any suitable communication interface.

In particular examples, bus 712 includes hardware, software, or both coupling components of computer system 700 to each other. As an example and not by way of limitation, bus 712 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCle) bus, a serial advanced technology attachment (SATA) bus, a Video Electronics Standards Association local (VLB) bus, or another suitable bus or a combination of two or more of these. Bus 712 may include one or more buses 712, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, computer readable medium or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the examples described or illustrated herein that a person having ordinary skill in the art would comprehend. The scope of this disclosure is not limited to the examples described or illustrated herein. Moreover, although this disclosure describes and illustrates respective examples herein as including particular components, elements, feature, functions, operations, or steps, any of these examples may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular examples as providing particular advantages, particular examples may provide none, some, or all of these advantages.

## Claims

1. A method, comprising:
extracting an attribute from a user profile in accordance with receiving user input at an interactive input form provided at a graphical user interface on a first computing device;
generating, by a machine learning model, an advertisement that is customized based on the user input and the attribute, wherein the advertisement comprises an advertisement content component comprising at least one of a visual component or a text component; and
rendering, on the graphical user interface, an editable version of the advertisement, wherein the advertisement content component is editable on the graphical user interface.

2. The method of claim 1, wherein extracting the attribute comprises analyzing the user profile to compile information indicative of one or more of past advertisements associated with the user profile, text associated with the user profile, a post associated with the user profile, or an image associated with the user profile.

3. The method of claim 1 or 2, further comprising: determining a tone to be conveyed by the advertisement based on the user input and the attribute; and generating the advertisement content component to convey the tone.

4. The method of any preceding claim, wherein the user input comprises a feature description indicative of a feature to be included in the advertisement;
preferably wherein the feature is at least one of: an image, a video, a description, a phrase, or a tone.

5. The method of any preceding claim, further comprising determining the user profile for extracting the attribute based on an account used to access a website providing the interactive input form.

6. The method of any preceding claim, further comprising: securely accessing a database to determine the user profile associated with the user input.

7. The method of any preceding claim, wherein the machine learning model is configured to access a text to image application programming interface (API) to generate the visual component.

8. The method of any preceding claim, further comprising replacing, on the graphical user interface, the user input at the interactive input form with the editable version of the advertisement.

9. The method of any preceding claim, wherein the interactive input form comprises a text box configured to receive the user input, and a selectable object to initiate a user selection.

10. The method of any preceding claim, wherein the attribute comprises information indicative of past advertisements associated with the user profile.

11. The method of any preceding claim, wherein extracting the attribute occurs in response to a user selection at the graphical user interface.

12. The method of any preceding claim, wherein the interactive input form is accessible on a webpage presented on the graphical user interface.

13. A system, comprising:
at least one processor; and
at least one memory communicatively coupled to the at least one processor and comprising computer-readable instructions that upon execution by the at least one processor cause the at least one processor to perform the method of any preceding claim.

14. A computer readable medium comprising computer-executable instructions, which when executed by a computer, cause the computer to carry out the method of any of claims 1 to 12.

15. A computer program product comprising instructions which, when executed by a computer, cause the computer to carry out the method of any of claims 1 to 12.
